(19) Europäisches Patentamt
European Patent Office
Office européen des brevets

(11) EP 0 647 671 B1

## (12) EUROPEAN PATENT SPECIFICATION

(45) Date of publication and mention
of the grant of the patent:
15.07.1998 Bulletin 1998/29

(51) Int Cl.6: C08J 3/09, C08J 5/18
// C08L1:10

(21) Application number: 94115520.2

(22) Date of filing: 01.10.1994

(54) **Method of producing an acylated cellulose film**

Verfahren zur Herstellung einer acylierten Cellulosefilm

Procédé pour produire un film de cellulose acylé

(84) Designated Contracting States:
DE FR GB

(30) Priority: 08.10.1993 JP 253047/93
21.02.1994 JP 22483/94

(43) Date of publication of application:
12.04.1995 Bulletin 1995/15

(73) Proprietor: TEIJIN LIMITED
Osaka-shi Osaka (JP)

(72) Inventors:
• Iwata, Kaoru
Tokyo (JP)
• Abe, Masanori
Iwakuni-shi, Yamaguchi (JP)
• Yonemura, Utami
Tokyo (JP)

(74) Representative: Hoeger, Stellrecht & Partner
Uhlandstrasse 14 c
70182 Stuttgart (DE)

(56) References cited:
FR-A- 744 570          GB-A- 400 589
GB-A- 2 013 559        US-A- 2 319 051
US-A- 2 512 490

**Description**

BACKGROUND OF THE INVENTION

1. Field of the Invention

The present invention relates to a method of producing an acylated cellulose film. More particularly, the present invention relates to a method of producing an acylated cellulose film having a high surface property, transparency and uniformity in quality, by a film-casting method using a solvent comprising 1,3-dioxolane which is a halogen-free, non-environment-polluting solvent.

2. Description of Related Art

It is known that an acylated cellulose, for example, cellulose acetate, is useful for producing various films, for example, photographic base film and packing film. Recently, cellulose acetate film is practically utilized as a protecting film for a polarizing plate of a liquid crystal display device.

The properties of the cellulose acetate are quite variable depending on a degree of polymerization and a degree of acetylation thereof. Generally, the higher the degree of polymerization and the degree of acetylation, the higher the heat resistance, humidity resistance and dimensional stability, and the lower the processability and solubility.

Presently, it is believed that cellulose triacetate having a high molecular weight can be dissolved at a high concentration only in methylene chloride, and thus a cellulose triacetate film is practically produced from a cellulose triacetate solution in methylene chloride by a film-casting method. However, in consideration of the fact that methylene chloride is a carcinogen and an environment-polluting substance, the use of methylene chloride is now going to be prohibited. This disadvantage of methylene chloride is derived from the low boiling point of 40°C and thus the solvent is evaporated away during the film-production process so as to accelerate the pollution of the environment.

Under the above-mentioned circumstances, a new solvent for acylated cellulose is strongly demanded to be developed.

SUMMARY OF THE INVENTION

An object of the present invention is to provide a method of producing an acylated cellulose film having excellent surface characteristics, transparency and optical isotropy and a low content of residual solvent, by using a halogen-free solvent.

The inventors of the present invention conducted extensive research to attain the above-mentioned object, and as a result it was discovered that 1,3-dioxolane is a good solvent for various acylated celluloses, and the resultant acylated cellulose solution in 1,3-dioxolane exhibits a high stability even at a high concentration thereof and thus an acylated cellulose film can be produced from the solution by a dry film-forming method. The present invention was completed based on this discovery.

Namely, the above-mentioned object can be attained by the process of the present invention for producing an acylated cellulose film, which comprises the steps of:

dissolving an acylated cellulose in a solvent substantially free from water and consisting essentially of 60 to 100% by weight of 1,3-dioxolane and 0 to 40% by weight of another solvent material in a ratio in weight of the acylated cellulose to the solvent of 1/25 to 1/2, to provide an acylated cellulose solution; spreading the acylated cellulose solution on a film-forming surface of a support; and drying the spread acylated cellulose solution layer to form a dried acylated cellulose film.

The afore-mentioned steps are known from FR-A- 744570, wherein the drying step is not specifically adressed.

In the method of the present invention, the drying procedure is carried out in two or more steps in such a manner that in one or more initial stages, the spread acylated cellulose solution layer is dried on the film-forming support surface at a temperature of from 30°C to 130°C, preferably 40°C to 120°C to such an extent that the content of the solvent remaining in the resultant first dried film is reduced to a level of 5 to 30% by weight, preferably 10 to 20% by weight, and then in a final stage, the initially dried film is removed from the film-forming surface of the support and finally dried at a temperature of from 100°C to 200°C preferably 100°C to 180°C, to such an extent that the content of the residual solvent in the resultant finally dried film is reduced to a level of 3% by weight or less, preferably 1% by weight or less, more preferably 0.5% by weight or less.

The initial drying procedure on the film-forming support surface is carried out in an atmosphere consisting essentially of an inert gas and 1,3-dioxolane gas, preferably in a content of 3% by volume or more whereas the final drying procedure is carried out in the ambient air or an inert gas atmosphere.

1,3-Dioxolane is a very good solvent for producing the acylated cellulose film. Only one slight disadvantage of 1,3-dioxolane is in that when brought into contact with air, 1,3-dioxolane is sometimes oxidized to produce a peroxide. As a result of energetic investigation of the inventors, it was found that the production of peroxide can be prevented by drying the acylated cellulose solution in an inert gas atmosphere. Surprisingly, it was found that even when 1,3-dioxolane is contained in a high concentration of 2.1% by volume, which is a lower limit concentration of explosion, or more in air, the acylated cellulose solution can be dried safely at a high efficiency. Namely, the acylated cellulose solution can be dried in an atmosphere containing 1,3-dioxolane by a simple operation and the solvent can be recovered at a high efficiency.

Preferably the afore-mentioned other (organic) solvent material comprises at least one member selected from the group consisting of hydrocarbon compounds, ketone compounds, ester compounds, ether compounds and halogenated hydrocarbon compounds and has a boiling point of 40°C to 160°C.

BRIEF DESCRIPTION OF THE DRAWING

Figure 1 is a graph showing a relationship between drying time and residual solvent content of an acylated cellulose film produced by the method of the present invention, in comparison with a comparative film.

Fig. 2 is a graph showing a relationship between drying time and residual solvent content of two cellulose triacetate films produced in Example 1 in accordance with the method of the present invention.

DESCRIPTION OF THE PREFERRED EMBODIMENTS

In the method of the present invention, an acylated cellulose is dissolved in a specific solvent to provide an acylated cellulose dope solution for producing an acylated cellulose film.

The acylated cellulose includes all the cellulose compounds produced by acylating entirely or partially hydroxyl groups of cellulose. The acyl groups of the acylated cellulose usable for the present invention are preferably selected from the group consisting of aliphatic acyl groups, for example, acetyl, propionyl and butyryl groups and cycloaliphatic acyl groups, for example, cyclohexanecarbonyl group, more preferably acetyl, propionyl and butyryl groups. Namely, the acylated cellulose usable for the present invention is preferably selected from the group consisting of cellulose acetate, cellulose propionate and cellulose butyrate, more preferably cellulose acetate. The acylated cellulose may be used alone or in a mixture of thereof with another one or more acylated celluloses.

For the acylated cellulose usable for the present invention, the degree of acylation can be established in consideration of the use of the resultant film. Preferable acylated cellulose has a degree of acylation of 2.0 or more, more preferably 2.2 or more, per repeating D-glucopyranosyl unit thereof. If the degree of acylation is less than 2.0, the larger the proportion of hydroxyl groups, the lower the solubility of the acylated cellulose in the specific solvent of the present invention.

Particularly, a tri-acylated cellulose having a degree of acylation of 2.8 or more, especially cellulose triacetate having a degree of acetylation of 2.8 or more exhibits a low water-absorption and excellent mechanical properties, and thus is useful for forming photographic base film and protecting film of a polarizing plate of a liquid crystal display device. The number of hydroxyl groups of each repeating cellulose unit is 3 and thus a maximum degree of acylation for cellulose is 3.

The acylated cellulose usable for the method of the present invention preferably has a molecular weight corresponding to reduced viscosity ($\eta$sp/c) of 0.3 to 10.0 dl/g, more preferably 0.5 to 8.0 dl/g, determined in a concentration of 0.5 g/dl in 1,3-dioxolane at a temperature of 25°C. If the intrinsic viscosity is more than 10.0 dl/g, the resultant acylated cellulose sometimes exhibits an unsatisfactory solubility in the specific solvent of the present invention. Even if the high viscosity acylated cellulose can be dissolved in the specific solvent, the resultant solution has a low concentration of acylated cellulose and a high viscosity and thus is not appropriate for the purpose of film formation.

The solvent usable for the preparation of the acylated cellulose dope solution contains substantially no water and consists essentially of 60 to 100%, preferably 70 to 100%, by weight of 1,3-dioxolane and 0 to 40%, preferably 0 to 30%, by weight of another solvent material in a mixing weight ratio of the acylated cellulose to the solvent of 1/25 to 1/2, preferably 1/12 to 1/2.

If the solvent contains a certain amount of water, it becomes difficult to obtain a dried cellulose film having an optically smooth surface thereof. Also, water exhibits a strong affinity for hydroxyl groups of cellulose and thus the interaction of water to the cellulose causes the drying of the spread cellulose solution layer to be difficult.

The solvent may consist of 1,3-dioxolane alone.

Another solvent material usable for the present invention is selected in consideration of the use of the film and the properties of the desired dope solution and film, for example, dissolving property of the acylated cellulose, and chemical and physical stability of the resultant solvent. Namely, the type and amount of another solvent material are established in consideration of the surface-improving (leveling) effect, the evaporation rate, the viscosity-controlling property and the crystallization-inhibiting effect thereof.

Another solvent material preferably has a boiling point of from 40°C to 160°C and comprises at least one member selected from the group consisting of aromatic hydrocarbon compounds, for example, toluene and xylene; ketone compounds, for example, acetone, methylethylketone, and cyclohexanone; ester compounds for example, ethyl acetate and butyl acetate; ether compounds, for example, ethyleneglycol dimethylether, 1,4-dioxane, tetrahydrofuran and 1,2-dioxolane; aliphatic alcohols, for example, methyl alcohol, ethyl alcohol, and isopropyl alcohol; and halogenated hydrocarbon compounds, for example, methylene chloride and 1,2-dichloroethane.

In the acylated cellulose dope solution usable for the method of the present invention, if the acylated cellulose/solvent mixing ratio is less than 1/25, the resultant dope solution has too low a content of the acylated cellulose and sometimes too low a viscosity, and thus the amount of solvent to be removed in the drying step becomes too much and the film-production cost becomes too high. Also, where the dope solution is formed into a thin filmy layer by a spreading or extruding method, the low viscosity of the dope solution causes an external disturbance to occure on the surface of the dope solution layer, and thus the resultant film-exhibits an unsatisfactory smoothness.

Also, if the mixing weight ratio of the acylated cellulose to the solvent is more than 1/2, the resultant dope solution exhibits an unsatisfactory fluidity and stability.

In the acylated cellulose dope solution, preferably the solvent is present in an amount of 30 to 115 parts, more preferably 40 to 110 parts, still more preferably 45 to 105 parts, by weight per 10 parts by weight of the acylated cellulose.

In the method of the present invention, the acylated cellulose dope solution is spread on a film-forming surface of a support, and the resultant filmy layer of the dope solution is dried by evaporating away the solvent, to produce a dry acylated cellulose film.

The film-forming steps can be conducted continuously, by three operations, namely, a dope solution-spreading (casting) operation, an initial drying operation and a final drying (heat-treatment) operation.

By the dope solution-spreading operation, the dope solution is evenly spread on a film-forming support surface to form a filmy dope solution layer.

By the initial drying operation, most of the solvent is evaporated away from the filmy dope solution layer on the film-forming support surface.

By the final drying (or heat-treating) operation, the residual solvent in the initially dried acylated cellulose film is removed.

The dope solution-spreading operation can be conducted by extruding the acylated cellulose dope solution onto the film-forming support surface through a slit die or by spreading the acylated cellulose dope solution on the film-forming support sheet by using a doctor blade or a reverse-roll coater. Preferably, the acylated cellulose dope solution is continuously extruded through a slit die onto a smooth film-forming surface of a drum or a belt. The film-forming support is not limited to specific means, and can be selected from glass base plates, metal base plates, for example, a stainless steel plate and a ferrotype plate, and plastic base plates, for example, a polyethylene terephthalate plate. Usually, metal base plates having a mirror-finished surface are used to produce an acylated cellulose film having uniform surface characteristics at a high efficiency.

In the production of the acylated cellulose film having a desired transparency and surface-smoothness from the dope solution, a viscosity of the dope solution is an important parameter. The viscosity of the dope solution is variable depending on the type, concentration and molecular weight of the acylated cellulose and the type of the solvent. Preferably, the acylated cellulose dope solution usable for the method of the present invention has a viscosity of 500 to 50,000 mPa·s, more preferably 1,000 to 20,000 mPa·s at the spreading temperature. If the viscosity is higher than 50,000 mPa·s, the resultant dope solution sometimes exhibits a poor fluidity and thus it is difficult to produce a smooth film. Also, if the viscosity is lower than 500 mPa·s, sometimes, the resultant dope solution exhibits too high a fluidity and thus in the spreading step, an external disturbance is generated on the surface of the spread dope solution layer, and it becomes difficult to obtain a film having a smooth and uniform surface.

In the method of the present invention, the spreading step of the acylated cellulose dope solution is preferably carried out at a temperature of 10 to 70°C, more preferably 15 to 50°C. If the spreading temperature is higher than 70°C, sometimes, a foaming phenomenon occurs in the spread dope solution layer and thus the resultant film is unsatisfactory in the surface smoothness thereof. Also, if the spreading temperature is lower than 10°C, sometimes the spread dope solution layer is cooled so as to increase the viscosity thereof and to condense dew thereon, and the resultant film has unsatisfactory surface smoothness.

In the drying step of the method of the present invention, preferably most of the solvent is evaporated as fast as possible from the spread acylated cellulose solution layer on the film-forming support surface. However, if the evaporation is effected too fast, the resultant film is sometimes deformed. Therefore, the drying conditions should be carefully set forth.

In the method of the present invention, the drying procedure is preferably carried out at a temperature of from 30°C to 200°C, more preferably from 40°C to 180°C.

The drying procedure may be carried out in a single step or two or more steps. In the two or more step drying procedure, in one or more initial stages thereof, the spread acylated cellulose solution layer is preferably dried on the film-forming support surface.

The initial drying operation on the film-forming support surface is carried out in an atmosphere consisting essentially of an inert gas, for example, nitrogen gas, carbon dioxide gas and a mixture thereof, and 1,3-dioxolane gas, preferably in a content of 3% by volume or more.

The 1,3-dioxolane-containing atmosphere for the drying operation is effectively utilized to control the evaporation rate of 1,3-dioxolane from the spread dope solution layer, and the content of the residual solvent in the dried film.

Generally, the drying operation on the film-forming support surface is carried out at a temperature of 30°C to 130°C, preferably 40°C to 120°C, for a drying time of 5 to 60 minutes, more preferably 10 to 40 minutes, which is variable depending on the drying conditions and the moving speed of the film. In this operation, the drying temperature is preferably raised gradually and continuously to obtain a dried film having a high smoothness. To promote the drying rate, a drying gas blast may be applied to the spread dope solution layer. The drying gas blast preferably has a blast velocity of 1 to 20 m/sec, more preferably 2 to 15 m/sec. If the blast velocity is less than 1 m/sec., sometimes the drying-promotion effect is unsatisfactory, and if the velocity is more than 20 m/sec., sometimes, the surface of the spread dope solution layer is disturbed and thus the resultant dried film has an unsatisfactory smoothness. Preferably, in the initial stage of the drying operation, the drying gas blast is applied at a low velocity, and then the blast velocity is gradually and continuously increased.

The drying operation on the film-forming support surface is preferably carried out to such an extent that the residual solvent in the dried film is in a content of 5 to 30% by weight, more preferably 10 to 20% by weight.

After this drying operation is completed, the resultant dryed film is removed from the film-forming support surface.

If the content of the residual solvent is more than 30% by weight, the resultant film is too soft and is easily deformed due to flow of the polymer in the film when the film is peeled from the support surface. If the residual solvent content is less than 5% by weight, the dried film is firmly adhered to the support surface and thus the removal of the dried film is difficult.

The dried film removed from the support surface is preferably finally dried (or heat-treated) at a temperature of 100°C to 200°C, more preferably 100°C to 180°C, for a drying time of from 5 to 60 minutes, more preferably 10 to 30 minutes, to such an extent that the content of the residual solvent in the dried film is reduced to a level of 3% by weight or less, more preferably 1% by weight or less, still more preferably 0.5% by weight or less.

If the residual solvent content is more than 3%; the resultant dried film sometimes deforms with the lapse of time, or is dimensionally changed when it is further heated in succeeding processes. The final drying operation can be carried out while conveying the film by using a pin tenter or suspending roll dryer. In this final drying operation, an air blast may be introduced into the dryer. The final drying (heat-treatment) time is set forth in consideration of the drying conditions and the conveying velocity.

The dried film produced by the method of the present invention is not limited to ones having a specific thickness. Preferably, the dried film has a thickness of 5 to 500 μm, more preferably 10 to 300 μm.

A method of producing an acylated cellulose film in an inert gas atmosphere will be explained below.

In this method, the spread acylated cellulose solution layer is dried by removing the solvent in an inert gas atmosphere containing the solvent in a relatively high content.

The inert gas comprises at least one member selected from non-oxidative, incombustible gases, for example, nitrogen, argon, helium, and carbon dioxide gases, preferably nitrogen and carbon dioxide gases in an economical point of view.

In this drying procedure, the content of oxygen in the drying inert gas atmosphere is restricted to 10% by volume or less, preferably 8% by volume or less, more preferably 5% by volume or less. If the oxygen content is more than 10% by volume, the risk or explosion undesirably increases. The oxygen content has no lower limit as long as lower than the above-mentioned upper limit and can be established in consideration of economical effect.

In this method, the content of the solvent in the inert gas atmosphere is preferably 3% by volume or more, more preferably 5% by volume or more. Preferably, the content of the solvent in the inert gas atmosphere is 50% or less of the saturated concentration thereof at the drying temperature. If the solvent content is more than 50%, the drying rate of the spread acylated cellulose solution layer becomes too low.

During the drying procedure, the solvent containing 1,3-dioxolane, which is easily oxidized, can be recovered by introducing the solvent vapor generated in the drying procedure into a cooled condenser and liquefying the solvent vapor, substantially without oxidation of 1,3-dioxolane.

The drying procedure in the inert gas atmosphere can be carried out in the following manner: a dryer is connected to a supply source of an inert gas, for example, nitrogen gas, and a cool-condenser is connected to a gas outlet of the dryer. The cool-condenser is used to recover the solvent from the drying gas. A drying apparatus for this purpose is disclosed, for example, in Japanese Examined Patent Publication Nos. 55-36,389 and 59-21,656.

When the drying procedure is carried out in two or more steps, most of the solvent in the spread acylated cellulose solution layer is removed in the initial drying step, therefore, the final drying step is not necessary to be carried out in the inert gas atmosphere. Namely, the final drying procedure (heat-treatment) may be carried out in the ambient air atmosphere. Even where the final drying procedure (heat-treatment) is carried out in an inert gas atmosphere, it is preferable that the content of the solvent in the drying atmosphere is as low as possible.

When the inert gas atmosphere is used as a drying atmosphere for the spread acylated cellulose solution layer, there is substantially no risk of explosion even when 1,3-dioxolane vapor is contained therein. Therefore, the drying procedure can be effected in the presence of the solvent vapor in a high concentration, and the solvent vapor can be easily recovered by a simple cool-condensing operation.

When the drying procedure is carried out in the inert gas atmosphere, the oxidation of the solvent does not occur and thus the production of a peroxide from 1,3-dioxolane can be prevented. Generally, it is believed that the lower the solvent content in the drying atmosphere, the higher the drying rate of the solvent. However, in this method, the drying procedure can be smoothly carried out at a high drying rate even in an inert gas atmosphere having a high solvent content. Therefore, the total drying time of the initial drying procedure in the inert gas atmosphere having a high solvent content and the final drying procedure (heat-treatment) is similar to that in the ambient air atmosphere having a low solvent content. The reason for this phenomenon is supposed that in the initial drying procedure in an inert gas atmosphere having a high solvent content, the surface drying of the spread acylated cellulose solution layer is suppressed so that no skin layer is formed in the surface portion of the solution layer, and therefore, the solvent in the solution layer can be smoothly diffused and removed from the solution layer in the successive drying procedure including the final procedure (heat-treatment).

The method of the present invention is useful for producing an acylated cellulose film having excellent surface property, transparency and uniformity in quality, and a significantly reduced content of the residual solvent, by utilizing 1,3-dioxolane as a solvent.

EXAMPLES

The present invention will be further explained by the following specific example 1 which is merely representative and do not restrict the scope of the present invention in any way.

In example 1 and reference-examples, the physical properties of the acylated cellulose film were determined by the following measurements.

(1) Light transmission and haze of the specimen were measured by using an ultraviolet and visible ray spectrometer (Trademark: UV-240, Manufacturer: Shimazu Seisakusho)
(2) Viscosity of the dope solution was measured at a temperature of 25°C by using a B-type viscometer (Trademark: BH, Manufacturer: Tokyo Keiki K.K.).
(3) Retardation of the specimen was determined by measuring birefringence of the specimen with respect to visible light at a wavelength of 590 nm by using an automatic birefringence tester (Trademark: KOBRA - 21AD, Manufacturer: Kanzaki Seishi K.K.).

The retardation, namely differential phase, was calculated from the equation:

$$Re = \Delta nd$$

wherein Re represents the retardation of the specimen, $\Delta n$ represents the birefringence of the specimen, and d represents a thickness of the specimen.
(4) Quantitative analysis of a peroxide derived from 1,3-dioxolane was carried out by $^1$H-NMR.

Reference-Example 1

A dope solution was prepared by dissolving 10 parts by weight of cellulose triacetate having a degree of acetylation of 2.83 per repeating unit thereof and reduced viscosity ($\eta$sp/c) of 5.0 dl/g in 90 parts by weight of 1,3-dioxolane while stirring the mixture. The resultant dope solution had a concentration of cellulose triacetate of 10% by weight and was clear and viscous. The dope solution had a viscosity of $9.0 \times 10^3$ mPa·s at a temperature of 30°C.

It was confirmed that the dope solution was very stable for storage and no change in viscosity and no haze of the dope solution occurred even after being left to stand at room temperature for one week.

The dope solution was spread onto a horizontal glass plate surface by using a doctor blade, and the resultant dope solution filmy layer was dried on the glass plate surface at a temperature of 50°C for 5 minutes, then at a temperature of 90°C for 30 minutes, while blowing air at a speed of 2 m/sec. The initially dried film was removed from the glass plate. This film had a residual solvent content of 13% by weight. This film was finally dried at a temperature of 150°C for 10 minutes under the same airblowing conditions as above. A dried film having a thickness of 62 μm was obtained.

The dried film appeared clear and smooth and no roughened, surged and/or foamed surface portions were found.

This film had a tensile strength of 10 kg/mm$^2$, an ultimate elongation of 32%, and an initial modulus of elasticity of 310 kg/mm$^2$, and thus appeared very tough.

Also, the resultant film exhibited a light transmission of 90% and a haze value of 0.6% in the visible ray band, and thus optically appeared transparent.

Further, the film exhibited a differential phase, namely retardation of 10 nm or less, and thus had a high isotropy.

Comparative Example 1

A cellulose triacetate solution was prepared by the same procedures as in Reference-Example 1, except that 1,3-dioxolane was replaced by 1,4-dioxane. The resultant solution had a viscosity of $3.9 \times 10^4$ mPa·s which was significantly higher than that in Example 1 using 1,3-dioxolane, and thus was difficult to form a film.

Comparative Example 2

The same procedures for the preparation of the cellulose triacetate dope solution as in Reference-Example 1 were carried out, except that 1,3-dioxolane was replaced by one of 1,2-dichloroethane, acetone, ethyl acetate, tetrahydrofuran, acetonitrile, nitromethane and methylethyl ketone. In all cases, the resultant dope solutions were not homogeneous and could not be used for the production of films.

Reference-Example 2

A dope solution was prepared by dissolving 10 parts by weight of cellulose diacetate having a degree of acetylation of 2.4 per repeating unit thereof and reduced viscosity ($\eta$sp/c) of 3.8 dl/g in 90 parts by weight of 1,3-dioxolane, while stirring the mixture. The resultant dope solution had a concentration of cellulose diacetate of 10% by weight and was clear and viscous. The dope solution had a viscosity of $5.1 \times 10^3$ mPa·s at a temperature of 30°C. It was confirmed that the dope solution was very stable for storage and no change in viscosity and no haze of the dope solution occurred even after being left to stand at room temperature for one week.

The dope solution was spread onto a horizontal glass plate surface by using a doctor blade, and the resultant dope solution layer was dried on the glass plate surface at a temperature of 50°C for 5 minutes, then at a temperature of 90°C for 30 minutes, and finally at a temperature of 150°C for 10 minutes, while blowing air at a speed of 2 m/second. A dried film having a thickness of 56 μm was obtained.

The dried film appeared clear and smooth and had no roughened, waved and/or foamed portions. This film had a tensile strength of 7.9 kg/mm$^2$, an ultimate elongation of 28% and appeared very tough.

Also, this film exhibited a light transmission of 90% and a haze value of 0.6% in the visible ray band.

Further, the film exhibited a differential phase, namely retardation, of 10 nm or less, and thus had a high isotropy.

Reference-Examples 3 to 9

In each of Reference-Examples 3 to 9, a dope solution was prepared by the same procedures as in Reference Example 1, except that 1,3-dioxolane was replaced by a mixed solvent consisting of 80% by weight of 1,3-dioxolane and 20% by weight of the compound indicated in Table 1.

It was confirmed that the cellulose triacetate was completely and uniformly dissolved in the mixed solvent, and the resultant dope solution is very stable for storage, as indicated in Table 1.

The dope solution was spread and dried by the same procedures as in Reference Example 1 to produce a dried cellulose triacetate film. The resultant dried film appeared clear, smooth and uniform, and had no roughened, surged and/or foamed portions. Also, the film had a high transparency and isotropy. The test results are shown in Table 2.

Table 1

| Item | Mixed solvent material | | Concentration of polymer | Dope solution viscosity | Storage stability |
|---|---|---|---|---|---|
| Ref. Ex. No. | Type | Amount (wt%) | (wt%) | (mPa·s) | |
| 3 | Dioxane | 20 | 10 | $1.2 \times 10^4$ | good(*)$_1$ |
| 4 | Methylene chloride | 20 | 10 | $1.0 \times 10^4$ | good(*)$_1$ |
| 5 | 1,2-Dichloroethane | 20 | 10 | $1.2 \times 10^4$ | good(*)$_1$ |

Note: (*)$_1$: After leaving to stand at room temperature for 3 days, the viscosity and appearance (transparency) of the dope solution did not change.

Table 1   (continued)

| Item | Mixed solvent material | | Concentration of polymer | Dope solution viscosity | Storage stability |
|---|---|---|---|---|---|
| Ref. Ex. No. | Type | Amount (wt%) | (wt%) | (mPa·s) | |
| 6 | Acetone | 20 | 10 | $7.0 \times 10^3$ | good(*)[1] |
| 7 | Tetrahydrofuran | 20 | 10 | $8.5 \times 10^3$ | good(*)[1] |
| 8 | Ethyl acetate | 20 | 10 | $9.3 \times 10^3$ | good(*)[1] |
| 9 | Cyclohexanone | 20 | 10 | $1.2 \times 10^4$ | good(*)[1] |

Note: (*)[1]: After leaving to stand at room temperature for 3 days, the viscosity and appearance (transparency) of the dope solution did not change.

Table 2

| Item | Drying conditions (temperature (°C) × Time (min)) | Dried film | | | | | |
|---|---|---|---|---|---|---|---|
| | | Appearance | | Thickness (μm) | Transmission (%) | Haze (%) | Reterdation (nm) |
| Ref. Ex. No. | | Transpearency | Smoothness | | | | |
| 3 | (50 × 10)→ (90 × 30) → (130 × 15) | good | good | 61 | 91 | 0.8 | < 10 |
| 4 | (40 × 5)→ (60 × 10)→ (90 × 10)→ (130 × 5) | good | good | 60 | 90 | 1.0 | < 10 |
| 5 | (50 × 10)→ (60 × 10)→ (90 × 20)→ (130 × 10) | good | good | 56 | 91 | 0.7 | < 10 |
| 6 | (50 × 10)→ (70 × 10)→ (90 × 30)→ (130 × 10) | good | good | 52 | 91 | 1.0 | < 10 |
| 7 | (50 × 10)→ (70 × 10)→ (90 × 30)→ (130 × 10) | good | good | 48 | 91 | 0.9 | < 10 |
| 8 | (50 × 10)→ (70 × 10)→ (90 × 30)→ (130 × 10) | good | good | 52 | 90 | 0.9 | < 10 |
| 9 | (50 × 10)→ (70 × 10)→ (90 × 60)→ (150 × 10) | good | good | 63 | 91 | 0.7 | < 10 |

### Reference-Example 10

In this example, the content of residual solvent of a dried film produced from a cellulose triacetate dope solution in 1,3-dioxolane solvent was compared with that produced from a cellulose triacetate solution in dioxane solvent which is known as a solvent having a relatively high solubility for cellulose triacetate.

The same cellulose triacetate solution in 1,3-dioxolane solvent as in Reference-Example 1 was converted to a dried film by the same procedures as in Reference-Example 1, except that the resultant dried film had a residual solvent content of 15% by weight and a thickness of 80 μm.

For comparison, the same procedures as those mentioned above were carried out except that 1,3-dioxolane was replaced by dioxane and the resultant dried film had a residual solvent content of about 15% by weight and a thickness of 82 μm.

These films were subjected to a drying test at a temperature of 120°C under no blast condition.

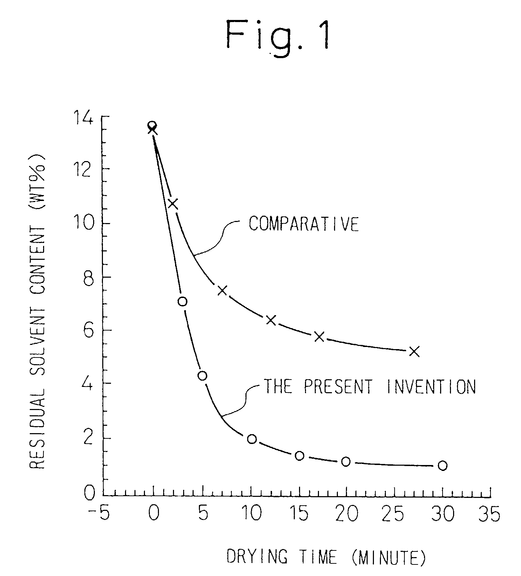

Figure 1 shows a relationship between drying time and residual solvent content of the film produced by the method of the present invention, in comparison with that of the comparative film.

Fig. 1 clearly shows that the 1,3-dioxolane can be removed from the cellulose triacetate film at a significantly higher removal rate than that of dioxane. Namely, by using 1,3-dioxolane as a solvent for acylated cellulose, a dried film having a low residual solvent content can be easily produced.

### Reference-Example 11

A dope solution was prepared by the same procedures as in Reference-Example 1, except that the cellulose triacetate was replaced by a cellulose propionate having 2.85 propionate groups per repeating unit thereof and a reduced viscosity ($\eta$sp/c) of 2.9 dl/g, and the resultant solution had a cellulose propionate concentration of 15% by weight. This dope solution exhibited a high stability for storage at room temperature. The dope solution was converted to a dried film by the same procedures as in Reference Example 1.

The resultant film had a high transmission of 91%, a low haze value of 1.0% and a low retardation (differential phase) of not exceeding 10 nm. Namely, the resultant film was clear, isotropic and tough.

### Reference-Example 12

A dope solution was prepared by the same procedures as in Reference Example 1, except that the cellulose triacetate was replaced by a cellulose butyrate having 2.82 butyrate groups per repeating unit thereof and a reduced viscosity ($\eta$sp/c) of 3.2 dl/g, and the resultant solution had a cellulose propionate concentration of 15% by weight. This dope solution exhibited a high stability for storage at room temperature. The dope solution was converted to a dried film by the same procedures as in Reference Example 1.

The resultant film had a high transmission of 91%, a low haze value of 0.8% and a low retardation (differential phase) of not exceeding 10 nm. Namely, the resultant film was clear, isotropic and tough.

### Comparative Example 3

A dope solution was prepared by the same procedures as in Example 1, except that 10 parts by weight of the cellulose triacetate was dissolved in 150 parts by weight of 1,3-dioxolane, the resultant solution had a cellulose triacetate concentration of 6.2% by weight, and the resultant film had a thickness of 39 μm and exhibited a satisfactory transparency.

However, this film had orange peel-like roughened and surged surface portions and thus exhibited an unsatisfactory smoothness.

### Example 1

The same cellulose triacetate solution in 1,3-dioxolane as in Reference-Example 1 was spread on a horizontal glass plate surface. The spread cellulose triacetate solution layer was dried in a nitrogen gas atmosphere containing 10% by volume of 1,3-dioxolane vapor at a temperature of 50°C for 30 minutes and then at a temperature of 90°C for 15 minutes. The resultant dried film was removed from the glass plate. This film contained 15% by weight of 1,3-dioxolane.

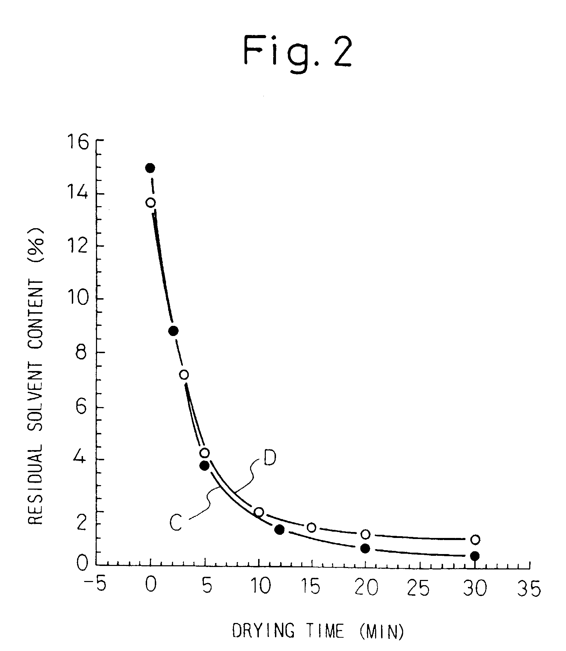

The drying curve of the resultant film was measured in the ambient air atmosphere at a temperature of 120°C under no blast condition. The result is shown by curve C in Fig. 2.

The same test was carried out for a cellulose triacetate film produced by the same procedures as mentioned above, except that the drying atmosphere was the ambient air atmosphere containing no 1,3-dioxolane, and 1,3-dioxolane content of the film was 13.5% by weight. The drying curve of this film was shown by curve D in Fig. 2.

In comparison of curve C with curve D, the residual 1,3-dioxolane content in the film dried in the 1,3-dioxolane vapor-containing nitrogen gas at a temperature of 120°C for 30 minutes was smaller than that of the film dried in the 1,3-dioxolane-free air atmosphere under the same condition as mentioned above. This phenomenon is due to the fact that in the initial stage of the drying procedure in the 1,3-dioxolane vapor-containing atmosphere, the evaporation of the solvent on the surface of the spread cellulose triacetate solution layer was suppressed and no skin was formed on the surface of the spread solution layer, and thus the solvent in the solution layer could be easily diffused and smoothly evaporated from the solution layer at a high efficiency.

The film dried in the 1,3-dioxolane-containing nitrogen gas atmosphere had a smooth surface and no roughened, surged and foamed portions were formed on the surface. This film had a tensile strength of 11 kg/mm$^2$, an ultimate elongation of 35% and an initial modulus of elasticity of 320 kg/mm$^2$, and appeared tough. Also, this film had a transmittance of 91% and a haze value of 0.5% for visible rays and appeared optically transparent. Further, this film had a differential phase (retardation) of 10 nm or less at a wave length of 590 nm and a residual solvent content of 0.5% by weight and appeared very isotropic.

The 1,3-dioxolane contained in the drying nitrogen gas in the dryer was collected by cooling the drying gas to a temperature of -70°C. A content of peroxide in the collected 1,3-dioxolane was measured by a quantitative analysis. As a result, the collected 1,3-dioxolane contained 104 ppm of a peroxide which is quite similar to that of the original 1,3-dioxolane of 100 ppm. Therefore, it was confirmed that during the cellulose film production, substantially no peroxide was generated.

## Claims

1. A method of producing an acylated cellulose film comprising the steps of:

    dissolving an acylated cellulose in a solvent free from water and consisting of 60 to 100% by weight of 1,3-dioxolane and 0 to 40% by weight of another solvent material in a ratio in weight of the acylated cellulose to the solvent of 1/25 to 1/2, to provide an acylated cellulose solution;

    spreading the acylated cellulose solution on a film-forming surface of a support; and

    drying the spread acylated cellulose solution layer to form a dried acylated cellulose film,

    characterized in that the drying procedure is carried out in two or more steps in such a manner that in one or more initial stages, the spread acylated cellulose solution layer is dried on the film-forming support surface at a temperature of from 30°C to 130°C in an atmosphere consisting essentially of an inert gas and 1,3-dioxolane gas to an extent that the content of the residual solvent remaining in the resultant dried film is reduced to a level of 5 to 30% by weight, and then in a final stage, the initially dried film is removed from the film-forming surface of the support and further dried at a temperature of from 100°C to 200°C in the ambient air atmosphere or an inert gas atmosphere to an extent that the content of the residual solvent remaining in the resultant finally dried film is reduced to a level of 3% by volume or less.

2. The process as claimed in claim 1 wherein the inert gas comprises at least one member selected from the group consisting of nitrogen gas and carbon dioxide gas each having a content of oxygen of 10% by volume or less.

3. The method as claimed in claim 1 or 2, wherein the weight ratio of the acylated cellulose to the solvent is in the range of from 1/12 to 1/2.

4. The method as claimed in anyone of claims 1 to 3, wherein the solvent consists of 1,3-dioxolane alone.

5. The method as claimed in anyone of claims 1 to 3, wherein another organic solvent material comprises at least one member selected from the group consisting of hydrocarbon compounds, ketone compounds, ester compounds, ether compounds and halogenated hydrocarbon compounds and has a boiling point of 40°C to 160°C.

6. The method as claimed in anyone of claims 1 to 5, wherein the acylated cellulose is an acetylated cellulose.

7. The method as claimed in claim 6, wherein the acylated cellulose is a cellulose acetate having 2 to 3 acetyl groups per repeating unit thereof.

8. The method as claimed in claim 7, wherein the cellulose acetate is cellulose triacetate.

9. The method as claimed in anyone of claims 1 to 8, wherein the acylated cellulose has a reduced viscosity of from 0.3 to 10.0 dl/g determined at a concentration of 0.5 g/dl in 1,3-dioxolane at a temperature of 25°C.

10. The method as claimed in anyone of claims 1 to 9, wherein the resultant dry acylated cellulose film has a thickness of 5 to 500 μm.

11. The method as claimed in anyone of claims 1 to 10, wherein the spreading procedure of the acylated cellulose solution is carried out at a temperature of 10 to 70°C.

12. The method as claimed in anyone of claims 1 to 11, wherein the acylated cellulose solution has a viscosity of 500 to 50,000 mPa·s.

**Patentansprüche**

1. Verfahren zur Herstellung einer Folie aus acylierter Zellulose, umfassend die Schritte:

   Auflösen einer acylierten Zellulose in einem wasserfreien Lösemittel, welches aus 60 bis 100 Gew.-% an 1,3-Dioxolan und 0 bis 40 Gew.-% an einem anderen Lösemittel besteht, in einem Gewichtsverhältnis von acylierter Zellulose zu Lösemittel von 1/25 bis 1/2, um eine acylierte Zelluloselösung zu bilden;

   Streichbeschichten einer folienbildenden Oberfläche eines Trägers mit der acylierten Zelluloselösung; und

   Trocknen der streichbeschichteten acylierten Zelluloselösungschicht, um eine getrocknete acylierte Zellulosefolie zu bilden,

   dadurch gekennzeichnet, daß der Trocknungsvorgang in zwei oder mehr Schritten in einer solchen Weise durchgeführt wird, daß in einer oder mehreren Anfangsstufen die streichbeschichtete acylierte Zelluloselösungschicht auf der folienbildenden Trägeroberfläche bei einer Temperatur von 30 °C bis 130 °C in einer Atmosphäre, welche im wesentlichen aus einem Inertgas und 1,3-Dioxolan-Gas besteht, in einem Ausmaß zu trocknen, daß der Gehalt an restlichem Lösemittel, welches in der resultierenden getrockneten Folie verbleibt, auf ein Niveau von 5 bis 30 Gew.-% herabgesetzt ist, und daß dann in einer Endstufe die anfänglich getrocknete Folie von der folienbildenden Oberfläche des Trägers entfernt wird und weiter bei einer Temperatur von 100 °C bis 200 °C in Umgebungsluftatmosphäre oder in einer Inertgasatmosphäre in einem Ausmaß getrocknet wird, daß der Gehalt an restlichem Lösemittel, welcher in der resultierenden, endgültig getrockneten Folie auf einen Gehalt von 3 Vol.-% oder weniger vermindert ist.

2. Verfahren nach Anspruch 1, worin das Inertgas mindestens ein Mitglied aus der Gruppe umfaßt, welche aus Stickstoffgas und Kohlendioxidgas besteht, wovon jedes Gas einen Gehalt von Sauerstoff von 10 Vol.-% oder weniger aufweist.

3. Verfahren nach Anspruch 1 oder 2, worin das Gewichtsverhältnis der acylierten Zellulose zu dem Lösemittel im Bereich von 1/12 bis 1/2 liegt.

4. Verfahren nach einem der Ansprüche 1 bis 3, worin das Lösemittel ausschließlich aus 1,3-Dioxolan besteht.

5. Verfahren nach einem der Ansprüche 1 bis 3, worin ein anderes organisches Lösemittelmaterial mindestens ein Mitglied, ausgewählt aus der Gruppe umfaßt, welche aus Kohlenwasserstoffverbindungen, Ketonverbindungen, Esterverbindungen, Ätherverbindungen und halogenierten Kohlenwasserstoffverbindungen besteht und einen Siedepunkt von 40 °C bis 160 °C aufweist.

6. Verfahren nach einem der Ansprüche 1 bis 5, worin die acylierte Zellulose eine acetylierte Zellulose ist.

7. Verfahren nach Anspruch 6, worin die acylierte Zellulose ein Zelluloseacetat mit 2 bis 3 Acetylgruppen pro Struktureinheit hiervon ist.

8. Verfahren nach Anspruch 7, worin das Zelluloseacetat Zellulosetriacetat ist.

9. Verfahren nach einem der Ansprüche 1 bis 8, worin die acylierte Zellulose eine reduzierte Viskosität von 0,3 bis 10,0 dl/g, gemessen bei einer Konzentration von 0,5 g/dl in 1,3-Dioxolan bei einer Temperatur von 25 °C, aufweist.

10. Verfahren nach einem der Ansprüche 1 bis 9, worin die resultierende trockene acylierte Zellulosefolie eine Dicke von 5 bis 500 µm aufweist.

11. Verfahren nach einem der Ansprüche 1 bis 10, worin das Streichbeschichtungsverfahren mit der acylierten Zelluloselösung bei einer Temperatur von 10 bis 70 °C durchgeführt wird.

12. Verfahren nach einem der Ansprüche 1 bis 11, worin die acylierte Zelluloselösung eine Viskosität von 500 bis 50 000 mPa·s aufweist.

**Revendications**

1. Procédé destiné à produire un film de cellulose acylée comprenant les étapes consistant à :

   dissoudre une cellulose acylée dans un solvant exempt d'eau et comprenant de 60 à 100 % en poids de 1,3-dioxolane et de 0 à 40 % en poids d'un autre solvant selon un rapport pondéral de cellulose acylée/solvant de 1/25 à 1/2, pour fournir une solution de cellulose acylée ;
   étaler la solution de cellulose acylée sur une surface formant film d'un support ; et
   sécher la couche de solution de cellulose acylée étalée afin de former un film de cellulose acylée séché,

   caractérisé en ce que la procédure de séchage est réalisée en deux étapes ou davantage de telle sorte que dans une étape initiale ou davantage, la couche de solution de cellulose acylée étalée est séchée sur la surface de support formant film à une température comprise entre 30°C et 130°C sous une atmosphère se composant essentiellement de gaz inerte et de 1,3-dioxolane gazeux dans une proportion où la teneur du reste de solvant résiduel dans le film séché obtenu est réduite à un niveau compris entre 5 et 30 % en poids, et ensuite, dans une étape finale, le film initialement séché est retiré de la surface formant film du support et davantage séché à une température comprise entre 100°C et 200°C sous l'atmosphère d'air ambiant ou une atmosphère de gaz inerte dans une proportion où la teneur du reste de solvant résiduel dans le film obtenu séché à la fin est réduite à un niveau de 3 % en volume ou inférieur.

2. Procédé selon la revendication 1, dans lequel le gaz inerte comprend au moins un élément choisi dans le groupe se composant d'azote gazeux et de dioxyde de carbone gazeux ayant chacun une teneur en oxygène de 10 % en volume ou inférieure.

3. Procédé selon la revendication 1 ou 2, dans lequel le rapport pondéral cellulose acylée/solvant est compris dans la plage allant de 1/12 à 1/2.

4. Procédé selon l'une quelconque des revendications 1 à 3, dans lequel le solvant se compose de 1,3-dioxolane seul.

5. Procédé selon l'une quelconque des revendications 1 à 4, dans lequel un autre solvant organique comprend au moins un élément choisi dans le groupe se composant de composés hydrocarbures, de composés cétones, de composés esters, de composés éthers et de composés hydrocarbures halogénés et possède un point d'ébullition compris entre 40°C et 160°C.

6. Procédé selon l'une quelconque des revendications 1 à 5, dans lequel la cellulose acylée est une cellulose acétylée.

7. Procédé selon la revendication 6, dans lequel la cellulose acylée est un acétate de cellulose ayant 2 à 3 groupes acétyle par motif récurrent de celui-ci.

8. Procédé selon la revendication 7, dans lequel l'acétate de cellulose est un triacétate de cellulose.

9. Procédé selon l'une quelconque des revendications 1 à 8, dans lequel la cellulose acylée possède une viscosité réduite comprise entre 0,3 et 10,0 dl/g déterminée à une concentration de 0,5 g/dl dans du 1,3-dioxolane à une température de 25°C.

10. Procédé selon l'une quelconque des revendications 1 à 9, dans lequel le film de cellulose acylée sec obtenu possède une épaisseur de 5 à 500 µm.

11. Procédé selon l'une quelconque des revendications 1 à 10, dans lequel le mode opératoire d'étalement de la solution de cellulose acylée est réalisée à une température comprise entre 10 et 70°C.

12. Procédé selon l'une quelconque des revendications 1 à 11, dans lequel la solution de cellulose acylée possède une viscosité comprise entre 500 et 50 000 mPa.s.

# Fig. 1

# Fig. 2